## Europäisches Patentamt

## European Patent Office

## Office européen des brevets

(19)

(11) **EP 1 491 876 A1**

(12) **EUROPEAN PATENT APPLICATION**

(43) Date of publication:
**29.12.2004 Bulletin 2004/53**

(51) Int Cl.⁷: $G01N\ 21/21$, G01N 33/487

(21) Application number: **03291552.2**

(22) Date of filing: **24.06.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK**<br><br>(71) Applicants:<br>• **Ecole Polytechnique**<br>**91120 Palaiseau (FR)**<br>• **ASSISTANCE PUBLIQUE, HOPITAUX DE PARIS**<br>**75004 Paris (FR)** | (72) Inventors:<br>• **Garcia-Caurel, Enric**<br>**75014 Paris (FR)**<br>• **Drevillon Bernard**<br>**92140 Clamart (FR)**<br>• **Schwartz Laurent**<br>**75005 Paris (FR)**<br><br>(74) Representative: **Michelet, Alain et al**<br>**Cabinet Harlé et Phélip**<br>**7, rue de Madrid**<br>**75008 Paris (FR)** |

(54) **FTIR ellipsometry device and process for characterization and further identification of samples of complex biogical materials, notably micro-organisms**

(57)    The invention is about an FTIR ellipsometry device and process for characterization of samples of complex biological materials, notably micro-organisms. According to the device part of the invention, the sample is a preparation by a deposition of the biological material on a substrate, the FTIR ellipsometry device has means to illuminate the sample on the substrate with variable wavelength infrared light and to produce at each predetermined value of the variable wavelength a measurement, the measurements defining a characterization spectrum, each measurement being one of the following values: $\Psi$, one of ellipsometric parameters in relation to a complex reflectivity ratio; $\Delta$, one of ellipsometric parameters in relation to a complex reflectivity ratio; a trigonometric function of $\Psi$ and $\Delta$; or a derivative at any order of one of the previous values.

Figure 5

**Description**

The current invention relates to a FTIR ellipsometry device and to a process for characterization of complex biological materials and notably, micro-organisms. It can be further used to identify such complex biological materials. It may be applied to detection and analysis apparatus in the field of biological studies, diagnosis, therapeutics, biochemistry or in medicine.

Microbiologic detection and identification represents a major problem in diverse clinical activities such as diagnosis of infectious diseases caused by microbial infections or such as cleanliness quality control certification of medical instruments and working places such as operating theaters. Many practical technologies have been proposed in this field. These are chemical technologies, by specific chemical reaction on a cellular component for example, physical technologies, by light interaction with a biological sample for example, genetics or even combination of these technologies.

In fact, standard microbiologic analysis is effective but has the drawback of requiring sample cultivation for periods usually varying from 48 to 72 hours, which is too long and impractical for some applications. As a consequence there is an increasing demand for new analytical technologies that can accelerate the microbiologic analysis with the same level of accuracy as the existing ones. Optical technologies have thus been proposed as an alternative to the standard analysis because they require less time and, in general, less sample matter. Further, optical instrumentation has a minimum maintenance cost and can be easily adapted to a clinical environment.

Among optical physical technologies, the ones such as spectroscopic ellipsometry appears to be an adequate optical technology in biology because of its non-invasiveness and high sensitivity to small amounts of molecules deposited on a surface as documented for non biological samples in B. Drévillon, *"Phase Modulated Ellipsometry from the Ultraviolet to the Infrared: In Situ Application to the growth of semiconductors"*, Prog. Crystal Growth and Charact., 27, 1-87 (1993). Standard spectroscopic ellipsometry is generally performed in the visible and the near ultraviolet range (270 to 800 nm) and has been applied for several decades to characterize surfaces and thin films for the determination of microstructures (roughness, porosity, thickness and composition). It is normally used to determine the optical response of a sample as well as to gain information about its physical structure, such as the possible presence and thickness of surface over layers, etc. However, spectroscopic ellipsometry has mainly been applied to the characterization of non biological samples of relatively simple and homogenous structures. Due to the intrinsic complexity of ellipsometric technology and the difficulties already encountered with the simpler non biological structures, its use on complex, inhomogeneous, structures such as the biological ones would have been hardly considered.

It has thus been surprising that such a technology could prove helpful in the characterization of complex biological materials, such achievements being possible by specific biological sample preparation and the adaptation of the ellipsometric measurements.

The current invention is about a physical technology involving interaction of complex biological materials, notably micro-organisms, with light and, more specifically, is using FTIR ellipsometry (Fourier Transform Infra Red ellipsometry) on complex biological materials. As such, firstly, the invention is about an FTIR ellipsometry device for characterization of samples of complex biological materials, notably microorganisms, the device comprising an FTIR ellipsometry measuring part with a programmable calculator.

According to the invention, the sample is a preparation by a deposition of the biological material on a substrate, the FTIR ellipsometry device has means to illuminate the sample on the substrate with variable wavelength infrared light and to produce at each predetermined value of the variable wavelength a measurement, the measurements defining a characterization spectrum, each measurement being one of the following values:

- $\Psi$, one of ellipsometric parameters in relation to a complex reflectivity ratio,
- $\Delta$, one of ellipsometric parameters in relation to a complex reflectivity ratio,
- a trigonometric function of $\Psi$ and $\Delta$,
- a derivative at any order of one of the previous values.

Following means, which can be used individually or in all possible technical combinations, are considered for the device:

- the characterization spectrum results from measures of a complex optical density D or a derivative at any order of the complex optical density D, the complex optical density D being defined as

$$D = \ln\left(\frac{\tan \overline{\Psi}}{\tan \Psi}\right) + j\left(\overline{\Delta} - \Delta\right)$$

with $\Psi$ and $\Delta$ two ellipsometric parameters in relation to a complex reflectivity ratio for the sample, $\overline{\Psi}$ and $\overline{\Delta}$ the same two ellipsometric parameters but for the substrate,

- the characterization spectrum is *Im"D*, the second derivative of the imaginary part of the complex optical density D,
- the infrared light is limited to mid infrared light between approximately 2 to 12µm,
- the device further comprises means to identify characterization spectra between them,
- the device further comprises means to identify a characterization spectrum of a further sample as referred to characterization spectra of several characterized previous samples, the calculator having means for:

  - normalizing the identification spectra of the previous and further samples, the characterization spectra, consisting of series of measurements in relation to the predetermined values of the variable wavelength, being corrected in order to have all the spectra passing to a same normalizing data point at one specific value of wavelength,
  - applying a data reduction for extracting sets of measurements of each previous and further characterization spectra and corresponding to a combination of a number of determined wavelength measurements, said number of determined wavelength measurements accounting for most of the information contained in the spectra,
  - classifying the sets of measurements according to a statistical distance between said sets, in order that:
  - if the further sample is in a group with at least one of previous sample, the further sample is being identified as belonging to said group of sample(s) and that
  - if the further sample is alone in a group, the further group is being identified as not belonging to any of the previous samples,

- the previous and further samples are known samples, and the classification results in a reference data base of known samples,
- the data reduction is performed through multivariate statistical analysis and preferably through principal component analysis,
- the normalizing data point at one specific value of wavelength is the maximum measured point of inflexion of the characterization spectra,
- the specific value of wavelength for the normalization step is around 1550cm$^{-1}$,
- the classification is done by the calculator using a hierarchical clustering scheme with an Euclidean norm, $dist_{A,B}$, for quantification of the difference between sets of measurements, the hierarchical clustering scheme being preferably done by a Ward's method and the Euclidean norm being preferably calculated with:

$$dist_{A,B} = \frac{1}{N}\sqrt{\sum_k \left(\mathrm{Im}''D_{k,A} - \mathrm{Im}''D_{k,B}\right)^2}\,,$$

- the sample is a dried solution of complex biological materials, the solution having being deposited on the substrate and having been dried on said substrate,
- the substrate is vibrating during the drying,
- the solution is a concentrate of complex biological materials obtained by centrifugation,
- the complex biological materials are cultivated microorganisms,
- the complex biological materials are human or animal cells grown in culture or grown into a host,
- the complex biological materials are human or animal tissues recovered by biopsy or excision.

Secondly, the invention is about a process. This process and all its variations are in functional correspondence with the preceding device and all its means alone or combined. This process is notably about the characterization of samples of complex biological materials, notably micro-organisms, the process being conducted in a device comprising an FTIR ellipsometry measuring part with a programmable calculator,

According to the process, the sample is prepared by a deposition of the biological material on a substrate, the sample on the substrate is illuminated with the FTIR ellipsometry device which produces at each predetermined value of the variable wavelength a measurement, the measurements defining a characterization spectrum, each measurement being one of the following value:

- $\Psi$, one of ellipsometric parameters in relation to a complex reflectivity ratio,
- $\Delta$, one of ellipsometric parameters in relation to a complex reflectivity ratio,
- a trigonometric function of $\Psi$ and $\Delta$,
- a derivative at any order of one of the previous values.

Following means, as example of functional correspondence to the device means and which can be used individually or in all possible technical combinations, are considered for the process:

- the characterization spectrum is obtained from measures of a complex optical density D or a derivative at any order of the complex optical density D, the complex optical density D being defined as

$$D = \ln\left(\frac{\tan\overline{\Psi}}{\tan\Psi}\right) + j\left(\overline{\Delta} - \Delta\right)$$

   with $\Psi$ and $\Delta$ two ellipsometric parameters in relation to a complex reflectivity ratio for the sample, $\overline{\Psi}$ and $\overline{\Delta}$ the same two ellipsometric parameters but for the substrate,
- the characterization spectrum is $Im''D$, the second derivative of the imaginary part of the complex optical density D,
- the infrared light is limited to mid infrared range between approximately 2 to 12$\mu$m and a characterization spectrum of a further sample is identified as referred to characterization spectra of several characterized previous samples, the calculator:

   - normalizing the identification spectra of the previous and further samples, the characterization spectra, consisting of series of measurements in relation to the predetermined values of the variable wavelength, being corrected in order to have all the spectra passing to a same normalizing data point at one specific value of wavelength,
   - applying a data reduction for extracting sets of measurements of each previous and further characterization spectra and corresponding to a combination of a number of determined wavelength measurements, said number of determined wavelength measurements accounting for most of the information contained in the spectra,
   - classifying the sets of measurements according to a statistical distance between said sets, in order that:
   - if the further sample is in a group with at least one of previous sample, the further sample is being identified as belonging to said group of sample(s) and that
   - if the further sample is alone in a group, the further group is being identified as not belonging to any of the previous samples,

- the previous and further samples are known samples, and the classification results in a reference data base of known samples,
- the normalizing data point at one specific value of wavelength is the maximum measured point of inflexion of the characterization spectra,
- the data reduction is performed through multivariate statistical analysis and preferably through principal component analysis,
- the classification is done by the calculator using a hierarchical clustering scheme with an Euclidean norm, dist$_{A,B}$, for quantification of the difference between sets of measurements, the hierarchical clustering scheme being preferably done by a Ward's method and the Euclidean norm being preferably calculated with:

$$dist_{A,B} = \frac{1}{N}\sqrt{\sum_k \left(\mathrm{Im}''D_{k,A} - \mathrm{Im}''D_{k,B}\right)^2}$$

,

- the sample is a dried solution of complex biological materials, the solution having being deposited on the substrate and having been dried on said substrate and the substrate being made vibrating during the drying.

The wording complex biological materials relates to biological samples which are made of inhomogeneous molecular assemblies such as the ones found in microorganisms, cells, bacteria, fungus or even viruses as such or associated as in tissues, blood or other. This differentiates from homogeneous samples whose are made of one specific or little more than one molecular species.

The use of infrared light and preferably mid-infrared range of light, have the additional advantage of probing the molecular vibrational modes of the sample compounds, thus giving a chemical sensitivity because each biological molecule has a particular mid-infrared radiation absorption pattern. Thanks to the invention it is possible to detect biological materials and to classify it from their spectral response in the infrared measured by means of FTIR ellipsometry.

The invention is using a statistical multivariate treatment of the information contained in each spectra obtained by the FTIR ellipsometry. The main advantage of the method is that it allows us to group spectra corresponding to a given biological material in well defined clusters. As such, a reference database of spectra corresponding to diverse biological materials can be built-up and then used to try to identify a set of spectra measured from any biological sample. The invention is preferably applied to biological samples whose are microorganisms despite the fact that they are highly complex and inhomogeneous structures compared to non biological samples or simple substances or compounds. The invention may be applied to any kind of microorganism.

It has also to be noted that the identification can be absolute, that is a further sample is compared to previous known reference samples and thus the further sample can be named (or left unknown). The identification can be relative, that is a plurality of unknown samples are compared between them and groups of samples can thus be identified. Note that, in this last case, if the plurality of samples is known, we can obtain a reference data base in which groups of named samples are defined and which could be used for an absolute identification of a further sample.

Note also that the reference data base may be made of raw data (notably: raw ellipsometric measurements and/or optical densities and/or *Im"D*) and/or already further processed data (notably: spectra normalized and/or reduced and/or classified), the choice depending of the way the identification is done and of the possible types (absolute and/or relative) of identification the device is capable of. For the identification of a further sample, in which the further sample is compared to a reference database of previous samples, there are two possibilities. The first one is to calculate the processing steps (normalization, reduction and classification) on all available data, that is, the ones from previous samples and the one from the further sample. The second one is to calculate the processing steps only on the data of the further sample. In this second case, the normalization and the reduction will be made using same calculation parameters as the ones obtained for the creation of the reference data base, that is, for normalization, the same data point of one specific value of wavelength, and for reduction same kind of set of points, note that the classification will have to be done on all data (from previous and further samples).

The invention allows the characterization and classification of microorganisms from their polarimetric response in the mid-infrared range (2-12 µm) measured by FTIR ellipsometry. Apart from the ellipsometric measurements, the performance of the method also stands on the simplicity of sample preparation and on the data analysis. Spectroscopic ellipsometry is a non-invasive optical characterization technique sensitive to the polarization of the light reflected or transmitted by a sample. The extreme sensitivity of ellipsometry allows the detection changes on the sample surface, even at the monomolecular layer level. In the mid-infrared range each molecule exhibits a characteristic absorption fingerprint, thus making ellipsometry chemically selective. FTIR ellipsometry is used here for the first time to analyze bacteria grown in culture media. Sample preparation is extremely simple and consists of the evaporation of a droplet of an aqueous suspension of microorganisms on a planar surface of a substrate. Ellipsometric measurements are performed on the solid residue left on the surface after the evaporation of the droplet. Measurements produce a characterization spectrum. Data analysis on the characterization spectrum can be divided in three main steps. First, normalization of the characterization spectra. Second, data reduction (simplification) of the characterization spectra by Principal Component Analysis (PCA), which is one of the existing multivariate statistical techniques commonly used to eliminate redundant information. Third, classification of the simplified spectra using a standard clustering method. The invention can be employed to discriminate and identify bacteria at the species level.

Finally, it has to be noted that the invention may be worked on any kind of ellipsometer having spectroscopical means. If needed the theory and the applications of ellipsometry with examples of ellipsometer apparatus can be found in R.M.A. AZZAM and N.M. BASHARA "ELLIPSOMETRY AND POLARIZED LIGHT" North-Holland Personal Library ISBN 0 444 87016 4.

The invention will now be exemplified with the following non limiting description and in relation to:

Figure 1 whose represents schematically the interaction of a polarized light beam with a sample,
Figure 2 whose represents a particular optical configuration of an FTIR ellipsometer,
Figure 3 whose represents *Im"D* and *ImD* spectra for Ecoli1,
Figure 4 whose represents the *Im"D* spectra for *E. coli* and *P. vulgaris,*
Figure 5 is a dendrogram showing the result of the classification step by clustering for known bacteria and,
Figure 6 is a dendrogram in the case of the identification of unknown bacteria against a reference data base of known bacteria.

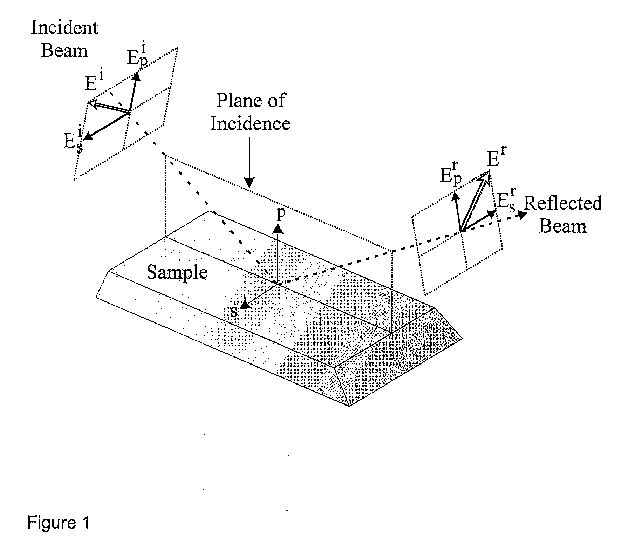

The general principles of ellipsometric measurements and of FTIR ellipsometry is first explained. Ellipsometry measures the change in the polarization state of a radiation beam after its reflection on the surface or its transmission through the volume of a given sample. This is summarized on Figure 1 where an incident light beam with $E^i_p$ $E^i$ $E^i_s$ parameters is directed on a sample in a plane of incidence, the direction p, respectively s, being parallel, respectively perpendicular, to the plane of incidence . After the light has interacted with the molecular constituents of the sample, a reflected light beam with $E^r_p$ $E^r$ $E^r_s$ parameters is obtained. During the reflexion, the polarizing state of the light is modified. The polarization of the reflecting light is thus analyzed spectroscopicaly with the FTIR ellipsometry which is a spectroscopic ellipsometer.

An ellipsometric measurement is expressed in terms of two angles, $\Psi$ and $\Delta$, that are related to the complex reflectivity ratio $\rho$, defined as:

$$\rho = \frac{r_p}{r_s} = \tan \Psi e^{j\Delta},$$

where $r_p$ and $r_s$ are the Fresnel reflectivity coefficients in polarization parallel and perpendicular, respectively, to the plane of incidence on the sample surface. Working with $\Psi$ and $\Delta$ spectra has the drawback that a baseline correction must be done for both magnitudes. To overcome this problem, the invention can use the optical density, defined as:

$$D = \ln\left(\frac{\tan \overline{\Psi}}{\tan \Psi}\right) + j(\overline{\Delta} - \Delta),$$

which applies normally to a semi-infinite substrate coated with a single layer. The bars over $\Psi$ and $\Delta$ ($\overline{\Psi}$ and $\overline{\Delta}$) indicate that these magnitudes correspond to the bare substrate. The main advantage of the optical density to prevent the influence of the spectral features caused by the absorptions of the substrate, therefore enhancing those due to the coating. In a common spectrum, an absorption with a Lorentzian-like shape appears in the real part of $D$, $ReD$, as a Lorentzian peak, and in the imaginary part, $ImD$, as an inflection. However, not all spectral features different from those coming from the sample absorptions, can be eliminated by the optical density. Apart from the described features due to absorptions, common spectrum can exhibit peaks and inflections, for instance coming from the multiple reflections experienced by the light beam inside the solid residue covering the substrate. The amplitude and spectral bandwidth of those features are different from those caused by the chemical absorption and may depend on the thickness and the density of the layer. Features coming from chemical absorptions are intrinsic whilst those coming from multiple reflections are extrinsic.

As a consequence, the second derivative of the imaginary part of $D$, $Im''D$, is used because it eliminates or at least minimizes the extrinsic contributions. Another advantage of $Im''D\cdot$ is that the signature left by an absorption appears as a sharp inflection centered at zero, which is a favorable feature for carrying out further statistical analyses.

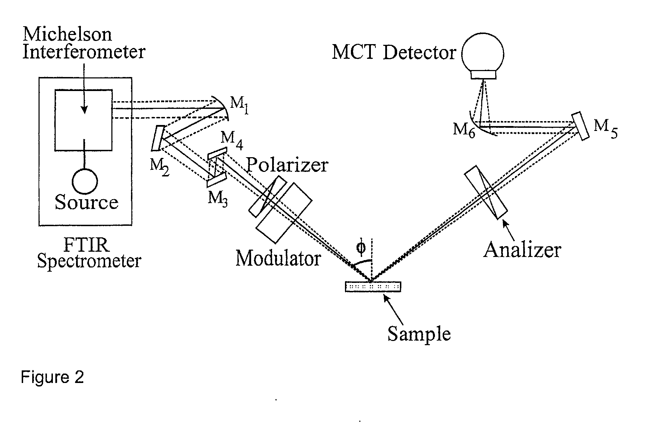

The optical configuration of the FTIR ellipsometer, which is schematically represented in Figure 2, consists of a conventional FTIR spectrometer, a linear polarizer, a photo elastic modulator, the sample, another polarizer called analyzer because it is used to analyze the polarization changes caused by the sample, and the detection system. On Figure 2, $M_1$-$M_6$ are mirrors and F is the focus of mirror $M_1$. As a detector, a liquid nitrogen cooled HgCdTe detector that allows measurements in the range from 900 to 3000 cm$^{-1}$, is used. Other types of detector may be used. The described sequence of optical elements, which is not the only one possible, is known as polarizer-modulator-sample-analyzer configuration and is the one used by our ellipsometer. If necessary, it is possible to find additional information about the alignment of the optical elements and the calibration procedure in A. Canillas, E. Pascual, B. Drévillon , *"Phase modulated ellipsometer using a Fourier transform infrared spectrometer for real time applications"*, Rev. Sci. Instrum., 64, 2153-2158 (1993) or in E. Garcia-Caurel, E. Bertran, A. Canillas, *"Optimized Calibration Method for Fourier Transform Infrared Phase-Modulated Ellipsometry"*, Thin Solid Films, 354, 187-194 (1999). In the example of application which is described hereunder, the angle of incidence on the sample was set to 72° and the acquisition of a complete spectrum at 4 cm$^{-1}$ of resolution took only 4 seconds noting that each measurement were made averaging 300 acquisitions to improve the signal to noise ratio.

An example of the application of the invention to microorganism is now given. Before measurements, biological sample(s) has (have) to be prepared. It is (they are) then measured for the calculation of a characterization spectrum (a). Further, after normalization, characteristic values are extracted from the spectrum (in case only the sample to be identified is processed) or spectra (in case the sample to be identified and previous ones from a reference data base are processed), thanks to a data reduction procedure. For further identification, a classification method is used for comparison between the samples.

In this example, six different known bacteria species whose names are detailed in Table 1 where characterized and classified. Table 1 specifies the names of the bacteria used for our example, the number of measurements done over each kind of bacteria and finally the label of each measurement. Measurements marked without X were used to build the database. Measurements marked X were used as unknown measurements to be classed within the database. The last column also includes the day when the samples where prepared and measured.

Table 1

| Bacteria Name | N° of samples | Samples Name / day |
|---|---|---|
| *Bacilus subtilis* | 3 | *Bsub1*, *Bsub2*, *Bsub3* / Day 1 |
| *Citrobacter diversus* | 3 | *Cdiver1, Cdiver2, Cdiver3* / Day 1 |
| *Escherichia Coli* | 3 | *Ecoli1, Ecoli2, Ecoli3* / Day 2 |
| *Enterococcus Faecalis* | 3 | *Efaec1, Efaec2, Efaec3* / Day 2 |
| *Pantogea Agglomerans* | 5 | *Paggl1, Paggl2, Paggl3* / Day 3<br>*Paggl_X1, Paggl_X2* / Day 4 |
| *Proteus Vulgaris* | 3 | *Pvulg1, Pvulg2, Pvulg3* / Day 3 |

The classification method is based on searching characteristic differences between spectra. In principle, differences between spectra arise from two origins that can be defined as intrinsic or extrinsic. By intrinsic we are referring to the chemical composition of the microorganism, which is specific to each individual. On the extrinsic side we can put all those effects coming from sample preparation conditions and possible culture growth media. Intrinsic and extrinsic effects do contribute to the differences between spectra and they are considered together and cannot be discerned by the classification method. This is why a sample preparation procedure has to be defined and kept for all characterizations/identifications and notably for building-up the reference database and for the following measurements. This guarantees an acceptable repeatability and reduces the variations in the measurements that could arise from the extrinsic origins. This is also why, in addition to the sample preparation method which will be described, data treatment prior to the application of the classification method has been chosen in order to also minimizing the effect of the extrinsic variability between spectra.

As concerns the sample preparation, the six different bacteria species (*Bacilus subtilis, Citrobacter diversus, Escherichia coli, Enterococcus faecalis, Pantogea agglomerans* and *Proteus vulgaris)* were grown in separate standard culture media for a period of 48 hours. After that, a portion of the grown colonies were diluted in pure water and subjected to a double centrifugation in order to take away as much of the culture media as possible. Concentration of bacteria in water was about $10^9$ individuals/ml. Sample preparation consisted of depositing a drop of 100 µl of solution on the bare surface of a substrate and leaving it to dry at room temperature. The substrates are crystal silicon wafers. Ellipsometric measurements were done in the residuals left on the silicon surfaces after evaporation. The shape of the evaporates was circular with an average surface of $1 \pm 0.1$ cm$^2$, i.e. large enough with respect to that of the infrared beam spot (10 mm$^2$).

It is possible to improve the homogeneity of the deposition by leaving the substrates on vibrating tables to shake the solution drops at a frequency between 30 and 60 Hz. At these frequencies the amplitude of the mechanical vibrations of the drop induced by the table was resonant, thus optimal for the mixing of bacteria in the evaporating water and the homogenization of the thickness of the resulting deposition.

Note that it may be also possible to add a determined amount of a tensio-active substance in the solution in order to improve the spreading of the drop on the substrate. Conversely, it is also possible with the initial solution, to use a substrate whose surface is treated to improve the spreading of the drop.

For this example, sample preparation and the measuring process spanned several days. All details concerning the days on which each sample was prepared are summarized in Table 1. In order to determine the effects of the inter-preparation variability, or in other words, the differences between spectra measured from different samples prepared from the same culture, three samples from each dilution were prepared and measured. In order to determine the effects of the inter-culture variability, that is the differences between spectra corresponding to the same bacteria species, but measured from preparations coming from separate cultures, the culture, preparation and measurements were repeated the fourth day for one of the previously analyzed bacteria species.

As concern the calculations, the data treatment of the second derivative of the imaginary part of the optical density spectra, *Im''D*, is done in three main steps. The first step is data normalization. It appears that the amplitude of the absorptions appearing in the spectra depends on the intrinsic nature of the sample and also on the total quantity of matter probed by the light beam. Data normalization is thus done because it is not possible to control the exact amount of bacteria deposited during the sample preparation, the variations due to fluctuations in bacterial concentration from sample to sample is compensated by normalizing all the spectra taking the maximum value of the inflection centered at approximately 1550 cm$^{-1}$ of spectra as reference. As a result of this first step of normalization all the spectra are passing to the same data point at a specific value of wavelength which is at approximately 1550 cm$^{-1}$. If a specific way of preparing the sample on the substrate would lead to perfectly controlled amount of bacteria, for example by coagulating bacteria in one or more determinated strata or by using a substrate with well defined anchoring structures for bacteria, this first step could eventually be omitted.

The second step is data reduction (simplification). Each spectrum consists of series of measurements in relation to the predetermined values of the variable wavelength. In the current example, each series has around 360 measurements. In order to have results of identification in a reasonable amount of time given available calculation power of the calculator, preferably a microcomputer, used in the device of the invention, the classification is not done on all these series of measurements but on a reduced set of relevant measures. This reduction is preferably done using a principal component analysis (PCA) calculation which is a well defined and known statistical/analysis method. To summarize, PCA consists of transforming the original series of measurements into a smaller set consisting of linear combinations of the original ones, which accounts for most of the information contained in the original set. Each element of the new set is called a principal component and the total number of components arising from a given analysis depends on the fraction of the original information retained by this new set. In general, only a few principal components are needed to retain more than 80% of the original information. If needed, the following literature can be consulted: W. R. Dillon, M. Goldstein, "Multivariate analysis", John Wiley & Sons, 1984 pp 23-99; or I. T. Jolliffe, "Principal Component Analysis", Springer Verlag; 2nd edition (October 1, 2002). In the current example, six principal components are used and the PCA analysis allowed to transform a spectrum composed by approximately 360 measures to a new one composed of only 6 measures, thus dramatically reducing its complexity.

The third step is data classification. This is preferably done by data Clustering of the reduced (simplified) spectra following a hierarchical clustering scheme. Such classification scheme is well defined and known and, if needed, additional information can be found in B. K. Lavine, *"Clustering and classification of analytical data"*, Encyclopedia of Analytical Chemistry, Editor R. A. Mayers, John Wiley & Sons (2002). Among the numerous algorithms used to group data into clusters, the Ward's method is preferred as giving excellent results. An Euclidean norm is used as a criterion to quantify the differences between spectra. All the calculus for the example were done with the commercial software STATISTICA®.

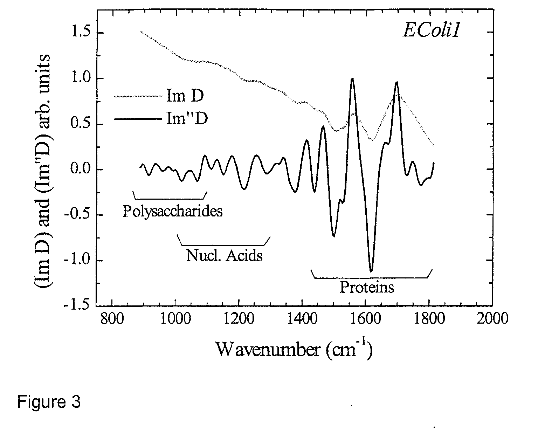

The results of characterizations and classifications of the samples are now described. As an example of characterization, the spectrum *Im"D* corresponding to the *Ecoli1* is represented on Figure 3 with, for information, the spectrum *ImD*. In *ImD* several inflections appear due to the absorptions related to the diverse chemical bonds of the bacteria, and a background whose shape depends on the sample preparation conditions. In the *Im"D* the background has been removed and only the inflections due to absorptions are apparent. *Ecoli1* was chosen as an example because its complex shape is representative of spectra of other samples.

What makes a spectrum of a given bacteria unique are the relative positions and intensities of the inflections due to absorptions and this gives a good characterization of the sample. There are several prominent absorptions that appear systematically in all spectra that can be assigned to known vibrations of chemical bonds present in molecules playing a key biologic role. The spectral region between 900 and 1200 cm$^{-1}$ is dominated by absorptions due to C-O and P-O stretching vibrations. The first vibration is characteristic of polysaccharides, such as glycogen, and the second one of nucleic acids and phospholipids. The prominent inflection at 1080 cm$^{-1}$ is also thought to originate from the P-O symmetric stretching mode of the ionized $PO_2^-$ group. From 1200 to 1250 cm$^{-1}$ there is a band mainly related to the P=O asymmetric stretching vibration of phosphodiesters, free phosphate and mono ester phosphate groups, all of which are found in nucleic acids and phospholipids. In the range from 1250 to 1500 cm$^{-1}$ there are vibrations of methylene, $CH_2$, and methyl, $CH_3$, groups that are non-specific because they are a part of all the organic molecules of microorganisms. In the spectral region from 1500 to 1800 cm$^{-1}$ the so-called amide I, at 1650 cm$^{-1}$, and amide II, at 1545 cm$^{-1}$, bands are predominant. Amide I is mainly due to C=O double bond stretching vibrations (80%) weakly coupled with C-N stretching vibrations (20%). Amide II arises from the coupling (60%) of N-H bending mode to C-N stretching (40%). In this region there is also, at 1730 cm$^{-1}$, a peak attributed to the C=O double bond stretching mode, typical of cholesterol esters, lipids, and carbonic acids.

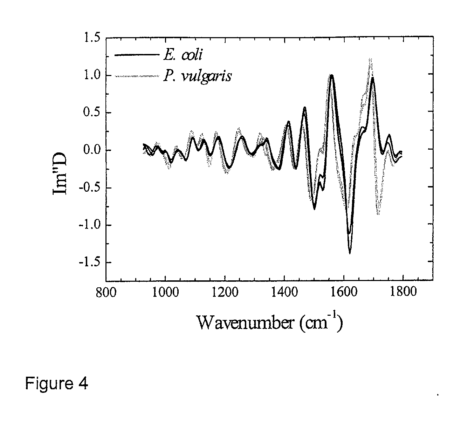

For identification, in order to avoid overlapping between clusters at the classification step it is necessary that the differences between spectra of the same bacteria species (intra-cluster) be as small as possible whilst differences between spectra of different bacteria (inter-cluster) be as large as possible. In order to illustrate the magnitude of intra-cluster and inter-cluster differences in the current example, on Figure 4 are all the measurements done for *E. coli* and *P. vulgaris* in the from of their respective *Im"D* spectra. As can be seen on Figure 4, spectra (normalized) corresponding to the same bacteria are almost identical while weak but noticeable differences appear when comparing spectra corresponding to two different species. In the case of *E. coli* and *P. Vulgaris* major differences appear in the spectral range from 1450 to 1700 cm$^{-1}$, which contains information about protein and lipid configuration. To have a quantitative measure of the intra-cluster and the inter-cluster distances we applied an Euclidean norm to the 6 spectra defined as:

$$dist_{A,B} = \frac{1}{N} \sqrt{\sum_{k} \left( \mathrm{Im}'' D_{k,A} - \mathrm{Im}'' D_{k,B} \right)^2} \ ,$$

where A and B represent two spectra of the whole set and the summation extends over all spectral components. As a result, we obtain a matrix of such Euclidean distances that is summarized in Table 2.

Table 2

|        | Ecoli1 | Ecoli2 | Ecoli3 | Pvulg1 | Pvulg2 | Pvulg3 |
|--------|--------|--------|--------|--------|--------|--------|
| Ecoli1 | 0      | 0.1    | 0.8    | 12.2   | 9.68   | 10.1   |
| Ecoli2 | ---    | 0      | 0.79   | 11.9   | 9.46   | 9.9    |
| Ecoli3 | ---    | ---    | 0      | 7.2    | 5.31   | 5.6    |
| Pvulg1 | ---    | ---    | ---    | 0      | 0.38   | 0.3    |
| Pvulg2 | ---    | ---    | ---    | ---    | 0      | 0.02   |
| Pvulg3 | ---    | ---    | ---    | ---    | ---    | 0      |

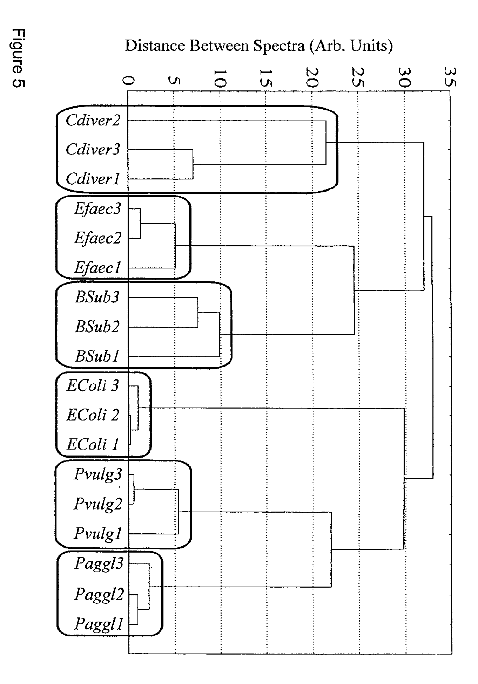

Entries corresponding to columns 1 to 3 and rows 1 to 3 of the table express intra-cluster distances for *E. coli*. Similarly, entries corresponding to columns 4 to 6 and rows 4 to 6 express intra-cluster distances for *P. vulgaris* and entries corresponding to columns 4 to 6 and rows 1 to 3 express inter-cluster distances. From this table, it appears that inter-cluster differences are on average much bigger, 80 times, than intra-cluster differences, thus indicating that spectra from *E. coli* and from *P. Vulgaris* are different enough to be placed in non intersecting clusters, or in other words, well separated clusters. Generalization of this process to spectra corresponding to the six bacteria species considered for this study, makes possible the construction of a matrix of distances that can be used as a reference to group the considered spectra into clusters. Figure 5 is a dendrogram showing the result of the clustering process with six clusters formed by characterization spectra (normalized and reduced) of the samples of the example. Here the classification is done correctly because each cluster contains spectra measured from only one bacterial species.

Such a dendogram is a tree-shaped map of inter-sample distances in the data set. The dendogram shows the merging of samples into clusters at various stages of the analysis and the similarities at which the clusters merge, with the clustering displayed hierarchically. The dendogram in Figure 5 shows the way the spectra have been unambiguously grouped into well defined clusters to form the database. In order to facilitate the visual identification of clusters each one has been encircled by a thick black line.

The invention can be applied for the setting-up of a data base of reference data for the purpose of the identification of *a priori* unknown characterization spectra, or in other words, spectra which were not used to build the reference database. For that purpose, it is necessary to run the clustering algorithm considering both the spectra used to build the database and those that are going to be identified. Ideally, once the clustering algorithm has been run, if the "unknown" spectra are related to one of the bacteria species in the database, they will be grouped into a cluster corresponding to the same bacteria. On the contrary, if the "unknown" spectra came from a bacteria not present in the database, they will be grouped forming a new cluster.

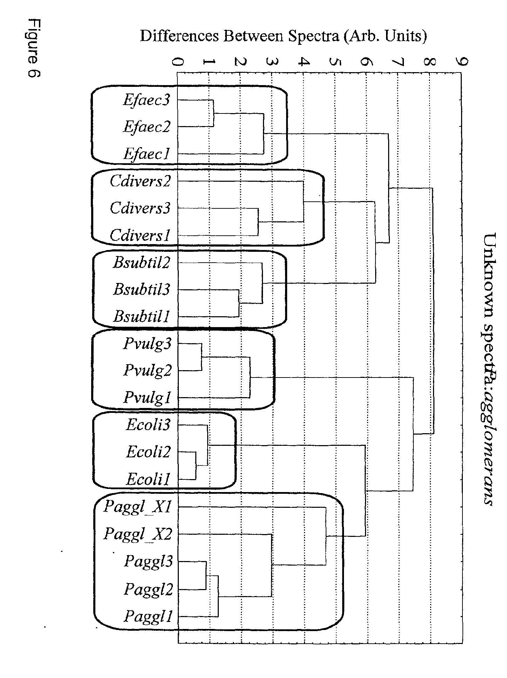

This identification procedure is illustrated in the following example in which two spectra of two samples, *Paggl_1X* and *Paggl_2X* , are considered as unknown. Those two spectra were measured from two samples of *P. agglomerans* that were cultured, prepared and measured several days after those used to build the database. On Figure 6 there is the dendogram showing the resulting clusters. Six clusters are formed when using the database to identify the "unknown" spectra. Identification is done correctly because the "unknown" spectra that are measured from *P. agglomerans* group together to those spectra used to build the database also measured from *P. agglomerans.* In this case classification has been successfully done because the spectra *Paggl_1X* and *Paggl_2X* are unambiguously grouped into a well defined cluster together with those of the database obtained from *P. agglomerans.* At this point it is important to note that if spectra coming from independent preparations made on different days can be unambiguously identified is, in part, due to the robustness of the proposed sample preparation method in terms of reproducibility.

As a conclusion, the FTIR ellipsometry, which is generally used to characterize surfaces, can be used for the characterization and identification of microorganisms thanks to a multivariate data treatment (reduction + clustering) of a set of ellipsometric measurements of different microorganisms. It allows the construction of a reference database to classify and identify other spectra of unknown individuals. The proposed sample preparation procedure allows to perform successful characterization and identification processes even if dealing with spectra measured from samples prepared separately. The different processing steps for identification which have been described are examples and other reduction and/or classification algorithms may be used in the device.

## Claims

1. FTIR ellipsometry device for characterization of samples of complex biological materials, notably microorganisms, the device comprising an FTIR ellipsometry measuring part with a programmable calculator, **characterized in that** the sample is a preparation by a deposition of the biological material on a substrate, the FTIR ellipsometry device has means to illuminate the sample on the substrate with variable wavelength infrared light and to produce at each predetermined value of the variable wavelength a measurement, the measurements defining a characterization spectrum, each measurement being one of the following values:

   - $\Psi$, one of ellipsometric parameters in relation to a complex reflectivity ratio,
   - $\Delta$, one of ellipsometric parameters in relation to a complex reflectivity ratio,
   - a trigonometric function of $\Psi$ and $\Delta$,
   - a derivative at any order of one of the previous values.

2. FTIR ellipsometry device according to claim 1, **characterized in that** the characterization spectrum results from measures of a complex optical density D or a derivative at any order of the complex optical density D, the complex optical density D being defined as

$$D = \ln\left(\frac{\tan \overline{\Psi}}{\tan \Psi}\right) + j\left(\overline{\Delta} - \Delta\right)$$

   with $\Psi$ and $\Delta$ two ellipsometric parameters in relation to a complex reflectivity ratio for the sample, $\overline{\Psi}$ and $\overline{\Delta}$ the same two ellipsometric parameters but for the substrate.

3. FTIR ellipsometry device according to claim 2, **characterized in that** the characterization spectrum is *Im"D*, the second derivative of the imaginary part of the complex optical density D.

4. FTIR ellipsometry device according to claim 1, 2 or 3, **characterized in that** the infrared light is limited to mid infrared range between approximately 2 to 12$\mu$m.

5. FTIR ellipsometry device according to any one of the previous claims, **characterized in that** it further comprises means to identify a characterization spectrum of a further sample as referred to characterization spectra of several characterized previous samples, the calculator having means for:

   - normalizing the identification spectra of the previous and further samples, the characterization spectra, consisting of series of measurements in relation to the predetermined values of the variable wavelength, being corrected in order to have all the spectra passing to a same normalizing data point at one specific value of wavelength,
   - applying a data reduction for extracting sets of measurements of each previous and further characterization spectra and corresponding to a combination of a number of determined wavelength measurements, said number of determined wavelength measurements accounting for most of the information contained in the spectra,
   - classifying the sets of measurements according to a statistical distance between said sets,

   in order that:

   - if the further sample is in a group with at least one of previous sample, the further sample is being identified as belonging to said group of sample(s) and that
   - if the further sample is alone in a group, the further group is being identified as not belonging to any of the previous samples.

6. FTIR ellipsometry device according to claim 5, **characterized in that** the previous and further samples are known samples, and that the classification results in a reference data base of known samples.

7. FTIR ellipsometry device according to claims 5 or 6, **characterized in that** the data reduction is performed through multivariate statistical analysis and preferably through principal component analysis.

8. FTIR ellipsometry device according to claims 5, 6 or 7, **characterized in that** the normalizing data point at one specific value of wavelength is the maximum measured point of inflexion of the characterization spectra.

9. FTIR ellipsometry device according to any one of claims 5 to 8, **characterized in that** the classification is done by the calculator using a hierarchical clustering scheme with an Euclidean norm, $dist_{A,B}$, for quantification of the difference between sets of measurements, the hierarchical clustering scheme being preferably done by a Ward's method and the Euclidean norm being preferably calculated with:

$$dist_{A,B} = \frac{1}{N} \sqrt{\sum_k \left( \mathrm{Im}'' D_{k,A} - \mathrm{Im}'' D_{k,B} \right)^2}$$

.

10. FTIR ellipsometry device according to any one of the previous claims, **characterized in that** the sample is a dried solution of complex biological materials, the solution having being deposited on the substrate and having been dried on said substrate.

11. FTIR ellipsometry device according to any one of the previous claims, **characterized in that** the substrate is vibrating during the drying.

12. FTIR ellipsometry device according to claims 10 or 11, **characterized in that** the solution is a concentrate of complex biological materials obtained by centrifugation.

13. FTIR ellipsometry device according to any one of the previous claims, **characterized in that** the complex biological materials are cultivated micro-organisms.

14. FTIR ellipsometry device according to any one of claims 1 to 12, **characterized in that** the complex biological materials are human or animal cells grown in culture or grown into a host.

15. FTIR ellipsometry device according to any one of claims 1 to 12, **characterized in that** the complex biological materials are human or animal tissues recovered by biopsy or excision.

16. FTIR ellipsometry process for characterization of samples of complex biological materials, notably microorganisms, the process being conducted in a device comprising an FTIR ellipsometry measuring part with a programmable calculator, **characterized in that** the sample is prepared by a deposition of the biological material on a substrate, the sample on the substrate is illuminated with the FTIR ellipsometry device which produces at each predetermined value of the variable wavelength a measurement, the measurements defining a characterization spectrum, each measurement being one of the following value:

    - Ψ, one of ellipsometric parameters in relation to a complex reflectivity ratio,
    - Δ, one of ellipsometric parameters in relation to a complex reflectivity ratio,
    - a trigonometric function of Ψ and Δ,
    - a derivative at any order of one of the previous values.

17. FTIR ellipsometry process according to claim 16, **characterized in that** the characterization spectrum is obtained from measures of a complex optical density D or a derivative at any order of the complex optical density D, the complex optical density D being defined as

$$D = \ln\left( \frac{\tan \overline{\Psi}}{\tan \Psi} \right) + j(\overline{\Delta} - \Delta)$$

with Ψ and Δ two ellipsometric parameters in relation to a complex reflectivity ratio for the sample, $\overline{\Psi}$ and $\overline{\Delta}$ the same two ellipsometric parameters but for the substrate.

**18.** FTIR ellipsometry process according to claim 17, **characterized in that** the characterization spectrum is *Im''D*, the second derivative of the imaginary part of the complex optical density D.

**19.** FTIR ellipsometry process according to claim 12, **characterized in that** the infrared light is limited to mid infrared range between approximately 2 to 12μm and that a characterization spectrum of a further sample is identified as referred to characterization spectra of several characterized previous samples, the calculator:

- normalizing the identification spectra of the previous and further samples, the characterization spectra, consisting of series of measurements in relation to the predetermined values of the variable wavelength, being corrected in order to have all the spectra passing to a same normalizing data point at one specific value of wavelength,
- applying a data reduction for extracting sets of measurements of each previous and further characterization spectra and corresponding to a combination of a number of determined wavelength measurements, said number of determined wavelength measurements accounting for most of the information contained in the spectra,
- classifying the sets of measurements according to a statistical distance between said sets,

in order that:

- if the further sample is in a group with at least one of previous sample, the further sample is being identified as belonging to said group of sample(s) and that
- if the further sample is alone in a group, the further group is being identified as not belonging to any of the previous samples.

**20.** FTIR ellipsometry process according to claim 19, **characterized in that** the previous and further samples are known samples, and that the classification results in a reference data base of known samples.

**21.** FTIR ellipsometry process according to claims 19 or 20, **characterized in that**:

- the normalizing data point at one specific value of wavelength is the maximum measured point of inflexion of the characterization spectra,
- the data reduction is performed through multivariate statistical analysis and preferably through principal component analysis,
- the classification is done by the calculator using a hierarchical clustering scheme with an Euclidean norm, $dist_{A,B}$, for quantification of the difference between sets of measurements, the hierarchical clustering scheme being preferably done by a Ward's method and the Euclidean norm being preferably calculated with:

$$dist_{A,B} = \frac{1}{N} \sqrt{\sum_{k} \left( \mathrm{Im}''D_{k,A} - \mathrm{Im}''D_{k,B} \right)^2}$$

.

**22.** FTIR ellipsometry process according to any one of claims 16 to 21, **characterized in that** the sample is a dried solution of complex biological materials, the solution having being deposited on the substrate and having been dried on said substrate and the substrate being made vibrating during the drying.

Figure 1

Figure 2

Figure 3

Figure 4

Figure 5

Figure 6

**European Patent Office**

## EUROPEAN SEARCH REPORT

Application Number

EP 03 29 1552

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | E.GARCIA-CAUREL ET AL: "Application of Fourier transform infrared elliposometry to assess the concentration of biological molecules" APPLIED OPTICS, vol. 41, no. 34, 1 December 2002 (2002-12-01), pages 7339-7345, XP001150084 * page 7340, right-hand column, line 1 - page 7341, left-hand column, paragraph 1 * | 1,2,4, 10,11, 16,17,22 | G01N21/21 G01N33/487 |
| X | GARCIA-CAUREL E ET AL: "APPLICATION OF FOURIER-TRANSFORM INFRARED ELLIPSOMETRY TO QUANTIFY BIOLOGICAL MOLECULES IN ANIMAL TISSUES" PROCEEDINGS OF THE SPIE, SPIE, BELLINGHAM, VA, US, vol. 4614, 19 January 2002 (2002-01-19), pages 134-144, XP008023227 ISSN: 0277-786X * abstract * * page 137, line 3 - line 5 * * page 137, last paragraph - page 138, paragraph 1 * * figure 1 * | 1 | |
| D,X | E.GARCIA-CAUREL, E.BERTRAN, A.CANILLAS: "Optimized calibration for Fourier transform infrared phase-modulated ellipsometry" THIN SOLID FILMS, vol. 354, 1999, pages 187-194, XP002258436 * figure 1 * * page 189, right-hand column, line 2 - line 4 * | 1 | |
| | -/-- | | |

TECHNICAL FIELDS SEARCHED (Int.Cl.7)

G01N

The present search report has been drawn up for all claims

| Place of search | Date of completion of the search | Examiner |
|---|---|---|
| THE HAGUE | 20 October 2003 | Verdoodt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**European Patent Office**

## EUROPEAN SEARCH REPORT

Application Number

EP 03 29 1552

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | CANILLAS A ET AL: "PHASE-MODULATED ELLIPSOMETER USING A FOURIER TRANSFORM INFRARED SPECTROMETER FOR REAL TIME APPLICATIONS" REVIEW OF SCIENTIFIC INSTRUMENTS, AMERICAN INSTITUTE OF PHYSICS. NEW YORK, US, vol. 64, no. 8, 1 August 1993 (1993-08-01), pages 2153-2159, XP000393875 ISSN: 0034-6748 * figures 1,2 * | 1 | |
| D,X | BREVILLON B: "PHASE MODULATED ELLIPSOMETRY FROM THE ULTRAVIOLET TO THE INFRARED: IN SITU APPLICATION TO THE GROWTH OF SEMICONDUCTORS" PROGRESS IN CRYSTAL GROWTH AND CHARACTERIZATION OF MATERIALS, ELSEVIER PUBLISHING, BARKING, GB, vol. 27, no. 1, 1993, pages 1-87, XP000579689 ISSN: 0960-8974 * the whole document * | 1 | TECHNICAL FIELDS SEARCHED (Int.Cl.7) |
| D,X | CANILLAS A ET AL: "AN IR PHASE-MODULATED ELLIPSOMETER USING A FOURIER TRANSFORM SPECTROMETER FOR IN SITU APPLICATIONS" THIN SOLID FILMS, ELSEVIER-SEQUOIA S.A. LAUSANNE, CH, vol. 234, no. 1/2, 25 October 1993 (1993-10-25), pages 318-322, XP000397453 ISSN: 0040-6090 * the whole document * | 1 | |

The present search report has been drawn up for all claims

| Place of search | Date of completion of the search | Examiner |
|---|---|---|
| THE HAGUE | 20 October 2003 | Verdoodt, E |